Europäisches Patentamt

European Patent Office

Office européen des brevets

(11) Publication number: **0 045 202**
A1

## EUROPEAN PATENT APPLICATION

(21) Application number: 81303419.6

(22) Date of filing: 24.07.81

(51) Int. Cl.³: **F 03 D 1/04**, F 03 D 11/04

(30) Priority: 26.07.80 GB 8024549

(43) Date of publication of application: 03.02.82
Bulletin 82/5

(84) Designated Contracting States: **AT BE CH DE FR GB IT
LI LU NL SE**

(71) Applicant: **Gilchrist, Timothy Michael, Mavis Bank,
Newrath Waterford (IE)**

(72) Inventor: **Gilchrist, Timothy Michael, Mavis Bank,
Newrath Waterford (IE)**

(74) Representative: **Ritter, Stephen David et al, Mathys &
Squire 10 Fleet Street, London EC4Y 1AY (GB)**

(54) Improvements in wind powered electric generators.

(57) A diffuser augmented wind turbine structure comprising a rotor assembly and an electric generator characterised in that the structure includes an axially disposed longitudinal load-carrying beam (1) which supports the rotor assembly and electric generator and defines a longitudinal axis about which the rotor ($R_1$) rotates, means for rendering the structure buoyant in air whereby the structure may be maintained airborne above the surface of the earth, said means including an annular lighter than air gas-filled shroud (3) surrounding the beam (1) to define a diffuser duct in which the rotor ($R_1$) rotates, means (1a) for maintaining the shroud (3) in aerodynamically fixed relation to the beam (1), and a stabilising stay system (10, 12, 13) connecting the beam (1) to anchor means (9) located at the surface of the earth such that the air-borne structure may travel in a circular path around the anchor means whereby the structure may be maintained substantially downwind of the anchor means with the diffuser inlet facing substantially into the wind irrespective of the direction of the wind.

- 1 -

## Improvements in wind powered electric generators

The present invention relates to improvements in wind powered electric
generators.

Recent proposals for wind energy support structures for extra large
multi-megawatt systems invariably involve the use of vast areas of land
and/or sea.  In theory, for basic wind energy array systems experts advise a minimum distance of ten times rotor diameter between each generator unit.  In practice, however, for maximum efficiency, an inter-
generator distance of 15 to 20 times rotor diameter is to be preferred.
Using such criteria Swedish research has shown that land use varies be-
tween 25 $km^2$ (9.6 sq. miles) to 8.3 $km^2$ per 100 MW for wind turbine sizes
of 1 MW (d-50 m, - 164 ft) to 10 MW (d-135m, - 442 ft).

Land for such large arrays of wind turbines must compete with other uses
of national economic importance, for example farming, forestry, fishing,
tourism, building development, mining, industrial expansion, and the like.
In the light of such competition, the legal and financial consideration
of land values involved, not taking into consideration the very long periods of time wasted in official feasibility and cost efficiency studies,
very often renders an otherwise technically viable wind turbine project
extremely cost-inefficient.  Also, the problems of transporting large
very heavy structural units over rough terrain with few or no roads or
railway access, adds their share of unforeseen and unnecessary capital
expenditure.

0045202

In my Irish Patent Specification No. 315/79 I describe and claim a support structure for a wind powered electric generator comprising a substantially horizontal load-carrying beam located above the surface of the earth and adapted to carry a wind rotor and generator, characterised in that the beam is anchored by means of a stabilising stay system comprised of at least one flexible cable connecting the beam to anchor means located at the surface of the earth, and the beam and/or the anchor means are movable in an arc relative to each other whereby the beam may be maintained substantially downwind of the anchor means with the rotor facing substantially into the wind irrrespective of the direction of the wind. In one embodiment of that invention the horizontal beam carrying the wind rotor and generator is carried above the surface of the earth by a lighter than air vehicle, which may be, for example, a helium filled airship.

The present invention is concerned with the integration of the horizontal rotor supporting beam, and its lighter than air support vehicle into a composite wind energy conversion system capable of very high power output. High power output per turbine diameter is obtained by using a diffuser augmented wind turbine. By use of such an augmenter increased power output and a reduction in the number of individual wind turbine support towers and anchorage systems can be achieved, thereby greatly reducing the cost per kW installed, and total land/sea requirements. In a diffuser augmented wind turbine the rotor is enclosed in a diverging duct called a diffuser and which may be in the form of a shroud or radial wing. The diffuser causes expansion of the turbine exhaust flow which results in a low pressure at the turbine exit which in turn induces greater air mass flow and velocity through the turbine than is obtained with conventional turbines.

Research on diffuser augmented systems has been carried out for many years in the U.S.A., (R.A. Oman, K.M. Foreman and B.L. Gilbert "Investigation of Diffuser Augmented Wind Turbines" ERDA Report COO-2616-2, Jan 1977; K.M. Foreman, B.L. Gilbert and R.A. Oman "Diffuser Augmentation of Wind Turbines" *J. of Solar Energy*, Vol. 20, No. 4 (April 1978); B.L. Gilbert and K.M. Foreman "Experimental Demonstration of the Diffuser Augmented Wind Turbine Concept", Proceedings of 13th Intersociety Energy Conversion Engineering Conference, San Diego, August 1978), and in Israel (Ozer Igra, Ben Gurion University of the Negev "Israel: Work on Aero-
generator Shrouds"; O. Igra and K. Schulgasser "Design and Construction of a pilot plant for a shrouded wind turbine", 2nd International
Symposium on Wind Energy Systems, Amsterdam, Oct. 1978). Power output
from diffuser augmented systems shows an increased power factor of 3 to
4 and greater, as against an unaugmented or unshrouded wind turbine in
a free air stream of equal diameter. To date, all work on diffuser augmented systems has been on a laboratory scale only. The construction of
such systems outside the laboratory, however, while technically feasible
up to 30 ft. diameter, has proved to be a very uneconomic source of
energy. This cost efficiency problem is due to the excessive construct-
ion cost of ground based augmenters, which require strong structural
materials relative to the size and power output of the system.

All experimental diffuser augmented systems so far erected have been
single ground based units, i.e. systems in which the rotor is supported
on a lattice steel tower or reinforced concrete platform, and is power
rotated on its base to face the prevailing wind. While diffuser augmented structures of up to 30 ft. diameter may be designed to withstand
wind gusts of up to 100 mph, similar base rotated diffuser augmented
structures having rotors of 100 - 200 ft. in diameter, are not technically
or economically possible, having regard to the present state of the art.

It is an object of the present invention to overcome the disadvantages
inherent in known diffuser augmented wind turbine systems and to provide
such a system which is capable of operating in an economic manner with
rotor blades of a diameter in the order of 100 to 200 ft.

According to the invention a diffuser augmented wind turbine structure
comprises a rotor assembly and an electric generator and is characterised
in that the structure includes an axially disposed longitudinal load-
carrying beam (1) which supports the electric generator (7) and the rotor
assembly and defines a longitudinal axis about which the rotor rotates,
means for rendering the structure buoyant in air whereby the structure
may be maintained air-borne above the surface of the earth, said means
including an annular lighter than air gas-filled shroud surrounding
the beam to define a diffuser duct in which the rotor rotates, means
for maintaining the shroud in aerodynamically fixed relation to the
beam, and a stabilising stay system connecting the beam to anchor means located at the surface of the earth such that the air-borne structure
may move in a circular path around the anchor means whereby the
structure may be maintained substantially downwind of the anchor means
with the diffuser inlet facing substantially into the wind irrespective
of the direction of the wind. The diffuser duct is preferably of
smaller internal diameter at its entrance than at its exit. Suitably,
the duct has an air-intake portion upstream of and converging towards
the rotor assembly, and a diffuser section downstream of and diverging
away from the rotor assembly towards the duct exit. The diffuser
section is suitably of conical shape. Preferably, the diffuser shroud
is of aerofoil shape in cross-section. The beam which is disposed
axially in the duct may be held in place by a plurality of tensioned
radial stays connecting the beam to the diffuser shroud. The beam may
itself be enveloped within a secondary gas-filled envelope which
assists in supporting the structure.

The wind turbine of the invention is preferably anchored by means of
a stabilising stay system as described in my Irish Patent Specification
No. 315/79. In addition the air borne structure may be held substantially
stationary at a selected position and altitude by means of a system of
power-driven horizontal and vertical rotors. These rotors may
automatically maintain the structure at a selected altitude by means
of an electronic altimeter control, for example.

By dispensing completely with support towers, ground-based support
tracks and balancing loads as described, for example, in my aforesaid
Irish Patent Specification No. 315/79, total freedom of location of the
wind turbine of the present invention is attained. A further advantage
of the system of the invention is that the structure may be located in
areas of high altitude so as to obtain maximum wind power.

The invention is described in more detail with reference to the embodiments illustrated in the accompanying drawings, wherein:

Figs. 1 & 1a are a sectional elevation and front elevation respectively
of a first embodiment of a wind generator in which the rotor is medium
speed rotor having 3 or 4 blades.

Fig. 2 is a diagramatic front elevation of a second embodiment of the invention having a slow speed high torque multi-blade rotor;

Fig. 3 is a diagramatic front elevation of a second embodiment of the invention having a high speed two blade rotor.

Figs. 4 and 4a are a sectional elevation and front elevation respectively of a fourth embodiment which includes a plurality of fixed or movable stators in the rotor assembly;

Figs. 5 and 5a are a sectional elevation and front elevation respectively of a fifth embodiment which includes a rear auxiliary augmenter;

Figs. 6, 6a and 6b show a side elevation, front elevation and layout plan respectively of a sixth embodiment in which three generators are interconnected to form a multi-module array;

Figs. 7, 7a and 7b show a side elevation, front elevation and layout plan of a seventh embodiment having five generators interconnected;

Figs. 8 to 8c are a side elevation, a front elevation and layout plans respectively of an eighth embodiment in which a multi-module array is anchored to a fixed tower;

Figs. 9, 9a and 9b show a plan view, a side elevation and front elevation respectively of a multi-module array located above a body of water;

Fig. 9c is a side elevation showing a modification of the system as illustrated in Figs. 8 to 8c;

Figs. 10 to 14a show details of an anchor system for use with the embodiment illustrated in Figs. 6, 7 and 9;

Figs. 15 to 16a, 19 and 19a illustrate methods of transporting the wind generators of the invention from their assembly location to wind-power site location;

Fig. 17 is a side elevation of a ninth embodiment of the invention;

Figs. 17a and 18 are an enlarged cross-section and front elevation respectively of the embodiment illustrated in Figure 17;

Figs. 20 to 21b illustrate methods of fabricating and assembling structures of the invention;

Figs. 22 and 23 are side elevations showing details of construction of wind turbines of the invention;

and

Figs. 24 and 25 are a plan and side elevation respectively of a layout of wind turbines of the invention to obtain maximum utilisation of gradient winds.

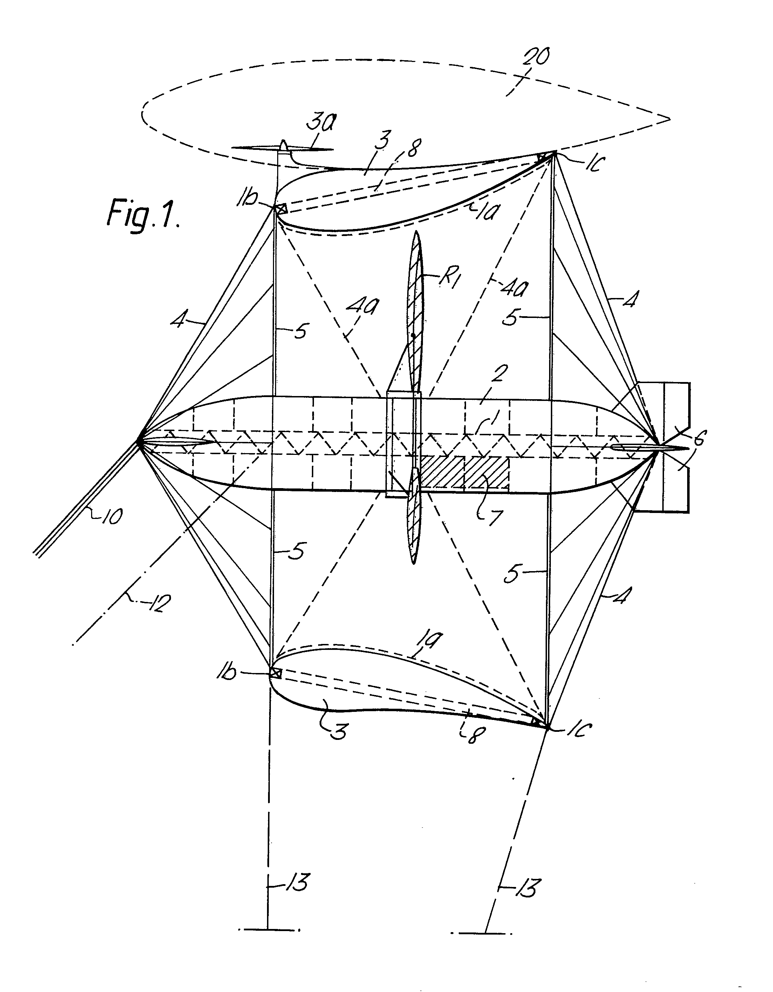

Referring to Figs. 1 and 1a of the drawings a diffuser augmented wind turbine comprises a substantially horizontal load-bearing beam 1 which suitably is in the form of a lattice girder. The beam 1 supports a generator 7 and a rotary ring 7a for the rotor blades $R_1$ as described in more detail in my Irish Patent Specification No. 315/79. The rotor blades $R_1$ rotate about a longitudinal axis defined by the beam 1 and in a duct which is defined by an annular shroud or augmenter 3.

The shroud 3 is comprised of a gas-inflatable balloon-type bag formed of a flexible membrane which preferably is plastics coated as described hereinafter. The shroud 3 may comprise a single bag, or may be formed of a plurality of bags, firmly laced or otherwise connected together to form a complete shroud. The membrane forming the shroud 3 is so shaped that when inflated it is of aerofoil shape in section. In an alternative arrangement the aerofoil shape is obtained by means of an internal grid of lattice beams (see Fig. 1). The grid 8 may contain a plurality of gas-filled bags (not shown).

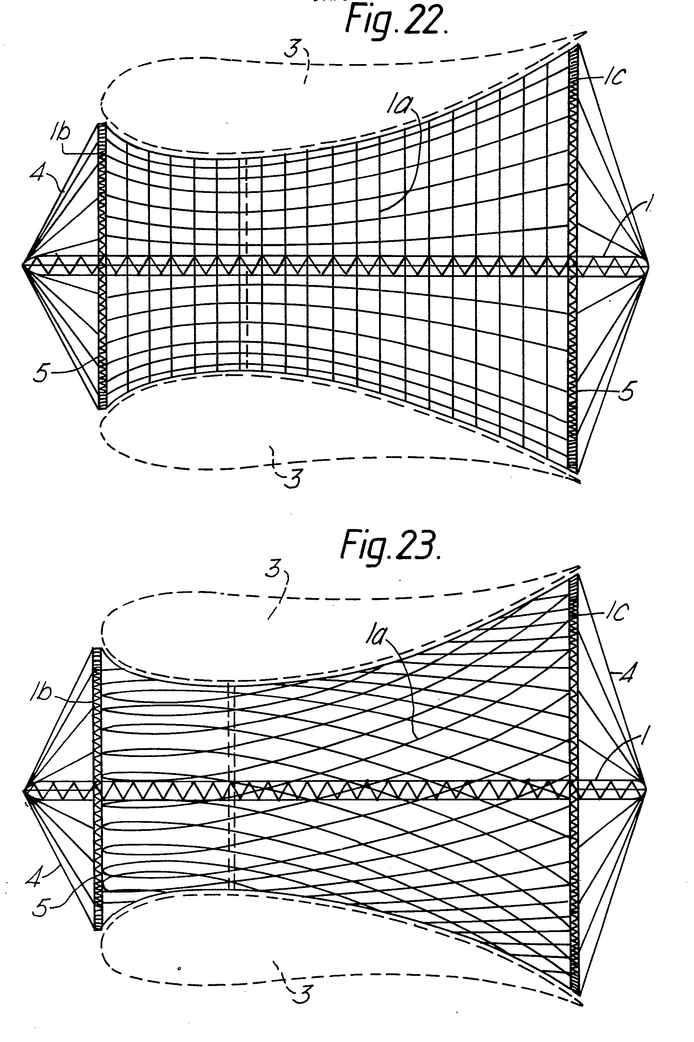

The shroud 3 is of annular shape and defines a duct in which the rotors $R_1$ rotate. The beam 1 is located along the longitudinal axis of the duct. The shroud 3 is supported and maintained in aerodynamically fixed relation to the beam 1 by means of a radially-tensioned net 1a. The net 1a is shown in more detail in Fig. 23. As shown in this figure, the net is comprised of a plurality of tensioned cables disposed at right angles to each other, longitudinally and transversely between support rings 1b and 1c which are located at opposite ends respectively of the beam 1. The support rings 1b and 1c surround the beam 1 which is disposed along the centre axis of the support rings, and the support rings are held in fixed relation to the beam 1 by means of a plurality of radial stays 4 tensioned between the support rings and the respective ends of the beam 1. The support rings 1b and 1c are preferably constructed of a curved lattice beam and may be further supported by radial cables 5.

The support ring 1b which is on the windward side of the wind turbine, defines the entrance to the air duct and is of smaller diameter than

support ring 1c which defines the exit of the duct. The radial transverse cables of the net 1a are of varying peripheral length such that on
tensioning the longitudinal axial cables of the net, the net imparts an
internal aerofoil shape to the duct, which includes a diffuser section
downstream of the rotor assembly $R_1$ which diverges away from the rotor
towards the exit of the duct.

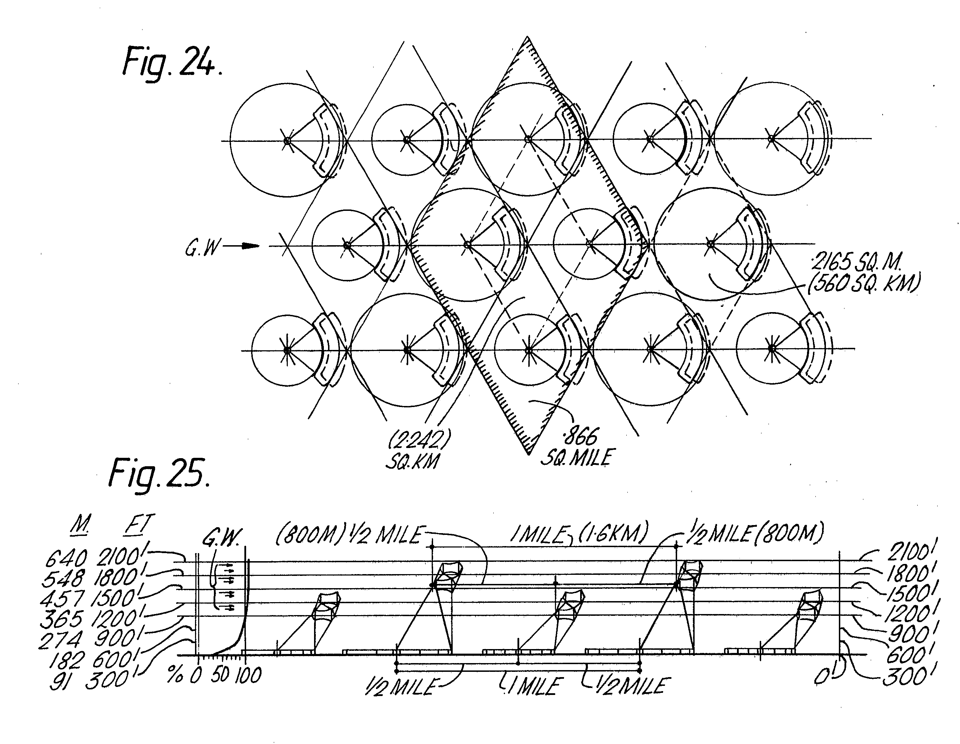

An alternative construction of net 1a is illustrated in Fig. 24. In
this arrangement the mesh of the net is comprised of longitudinal cables
disposed diagonally to each other in such a manner as to define the internal aerofoil shape of the duct. As in the embodiment of Fig. 23 the
duct is divergent.

Referring again to the embodiment illustrated in Figs. 1 and 1a, the
shroud 3 is inflated with a lighter than air gas, for example helium,
such that the structure can be maintained airborne. In this embodiment
the beam 1 is also enveloped in, and forms the main structural element
of, a balloon 2, which likewise is inflated with helium to give extra
lift to the structure. Sufficient inflation pressure should be used to
enable the structure to withstand all expected wind forces and to prevent
deflation of the aerofoil shape of the shroud 3 and balloon 2. Horizontal
stablising fins 6 may be mounted on the beam 1 and extend laterally from
the balloon 2. Additional vertical and/or horizontal stabilising fins
3a may be attached to an upper portion of the shroud 3 or an helicopter
type electrically driven rotor.

The shroud 3 and balloon 2 may be constructed of a single-skin membrane
but preferably a double or multiple membrane skin is used to facilitate
servicing and to allow for weathering of the external surfaces. Netting
or the like may be incorporated to reinforce the skins. As mentioned
above, the internal surface of the shroud 3 is supported by a net 1a and
this may be coated with a smooth lining to ensure smooth airflow through
the duct with a minimum of surface friction.

The material used in the construction of the membranes is preferably a
high tensile strength waterproof material. Suitable fabrics are com-
mercially available and are coated with such coatings as hypolon, polyvinyl chloride, silicone rubber and the like. The fabrics themselves may comprise nylon, dacron, polyester and the like.  The shroud 3 and
balloon 2 may have interior gas-filled bags made from a light-weight
gas-impervious material such as polytetrafluorethylene sheeting
(which is commercially available under the trade names "Mylor" and
"HOSTAVAN") or the like.

Snow and ice clearance is achieved by the installation of electric
air heating units inside all of the gas-filled elements to the main
surface temperature of all external membranes above freezing point.
Alternatively, flat electric low temperature heating tapes may be
fixed to all surfaces susceptible to ice or snow build up.  Suspension
hooks may be affixed to the outer skin of all structural membranes for
support of all service personnel repairing or otherwise servicing the
membrane surfaces.

In the embodiment illustrated in Fig. 1 and 1a a large diameter 3 or
4 blade rotor $R_1$ is used in conjunction with a centre body aerodynamically
shaped baloon 2 of medium diameter, and an augmenter 3 of large volumn
and medium axial length.  Diagonally disposed stays 4a are used to support
shroud 3 in addition to stays 4 and 5.

In this embodiment, and indeed with any of the embodiments of the invention
described herein, extra lift to the structure may be given by use of an
auxilary helium filled aerodynamically shaped balloon 20, which can be
attached to the top of shroud 3.  Horizontal lift and/or stabilising
rotor 3a, may be relocated on top of balloon 20, or two 3a rotors installed,
one each side of balloon 20.

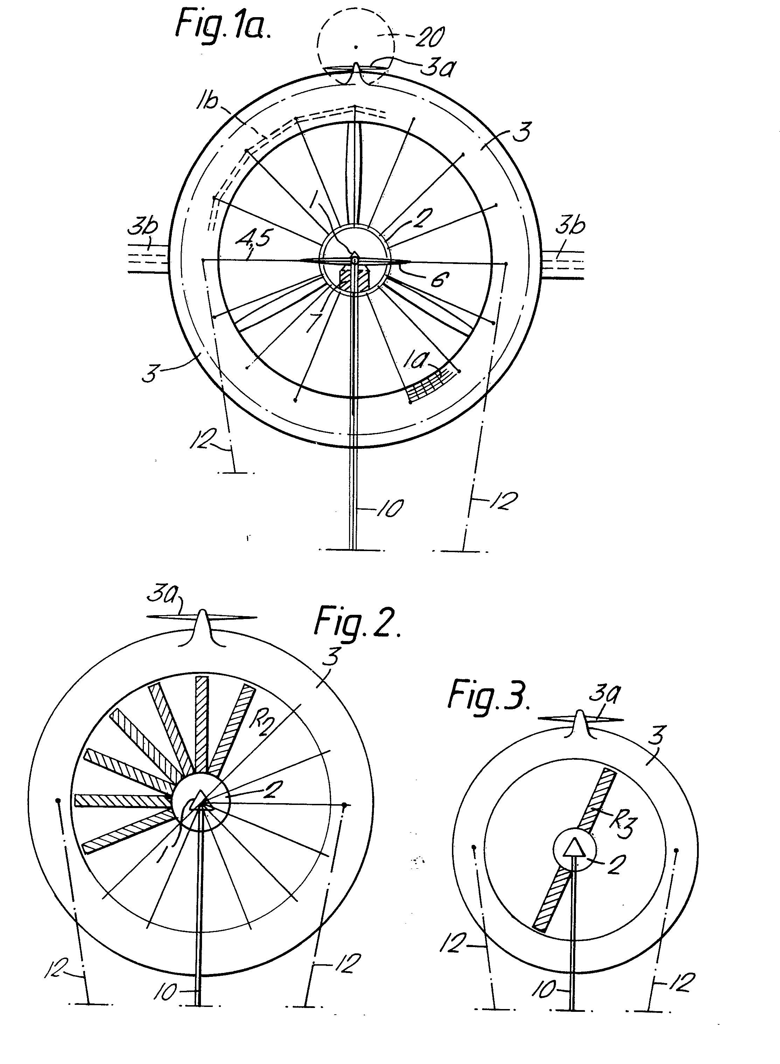

Figure 2 illustrates the use of an augmenter shroud with a large diameter
high torque multi-blade rotor $R_2$,    while figure 3 shows a high speed
2 blade rotor $R_3$.  The rotor construction  may as described in my Patent
Specification No. 335/79.

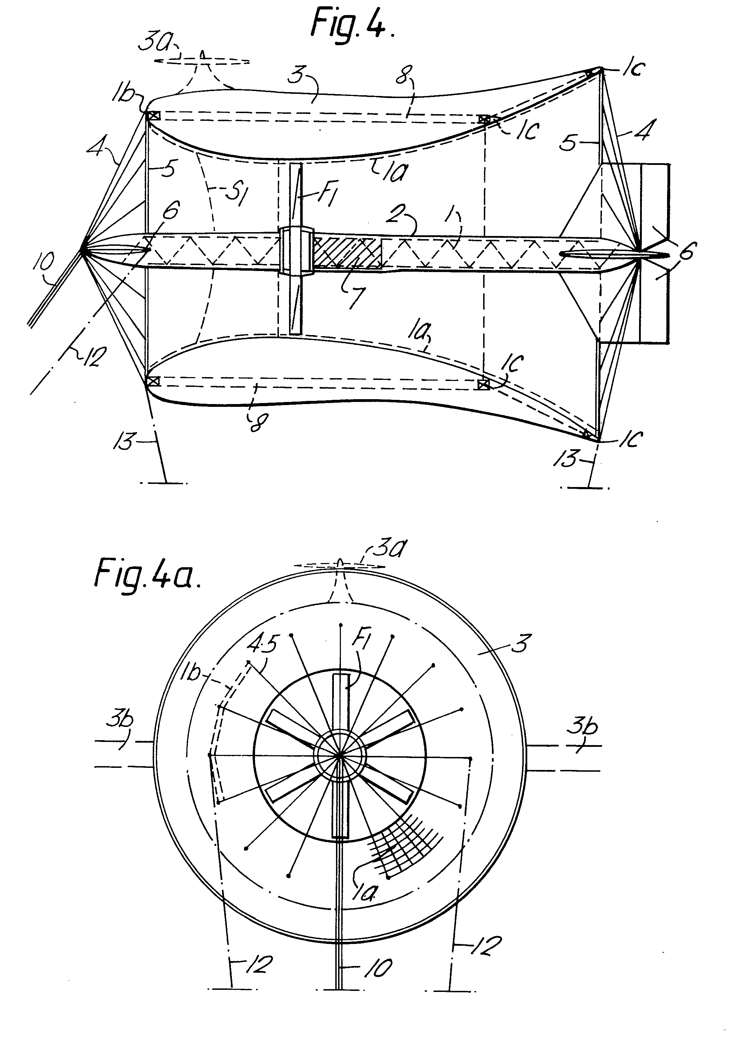

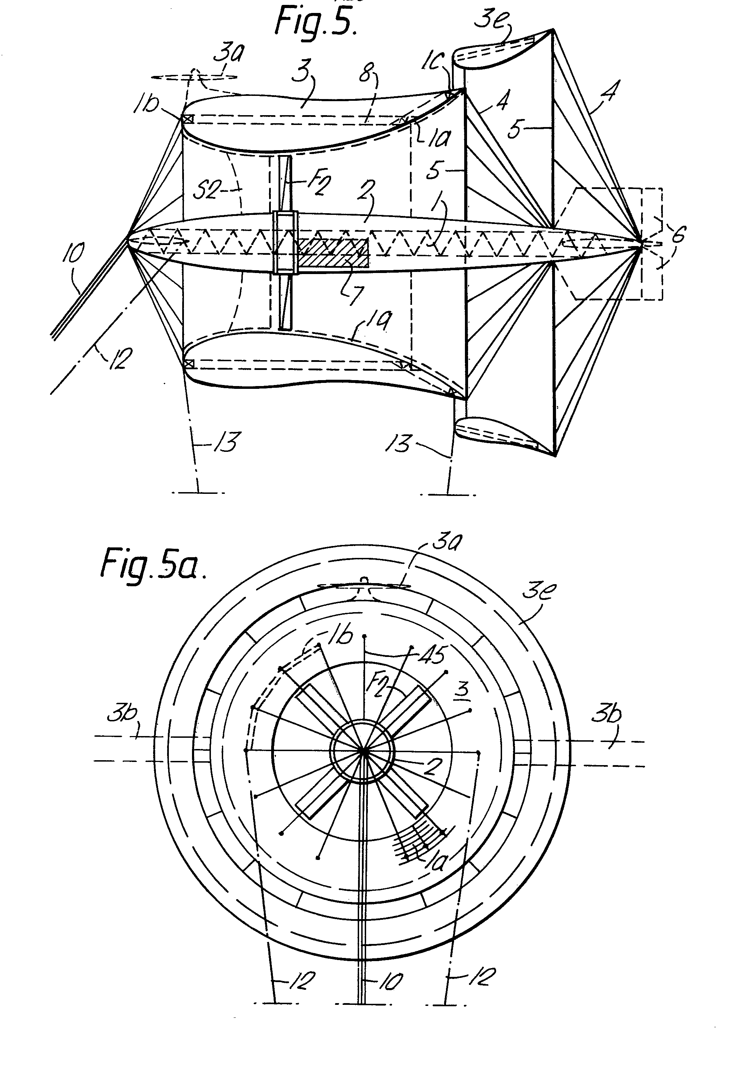

Turning now to Figs. 4 and 4a, in this embodiment the shroud 3 and duct
defined by it, are of very long length.  The rotor comprises a plurality
of rotatable blades $F_1$ movable in relation to stators $S_1$.  The stators
$S_1$ may be fixed stators or alternatively they may be movable about their axis so as to alter their pitch relative to the rotor blades. In this arrangement the balloon 2 is dispensed with and the beam 1 is given an aerofoil shape to ensure maximum efficiency of the rotor. The shroud 3 has an axial length at least equal to the length of the beam 1, or it may be considerably larger, so as to achieve maximum air pressure differential through the duct. Figs. 5 and 5a show a somewhat similar arrangement except that in this embodiment a second diffuser augmenter 3e is fitted to the leeward side of the augmenter 3. In these embodiments the duct has an air-intake portion upstream of the rotor which converges towards the rotor, and a diffuser section downstream of the rotor and diverging away from the rotor.

Location of the diffuser augmented wind turbine units of the invention at selected altitudes above ground or sea level is maintained by means of a system of upward thrust-resisting anchorage cables 10, 12, 13. The anchorage system may be for example, as described in my earlier Patent Specification No. 315/79. The anchorage cables are preferably light-weight cables made from synthetic plastics filaments of high tensile strength. Suitably, the cables are of sheeted polyamide filaments (for example of the kind sold under the trade name "KEVLAR" or "PARAFIL". The anchorage system is described in more detail hereinafter.

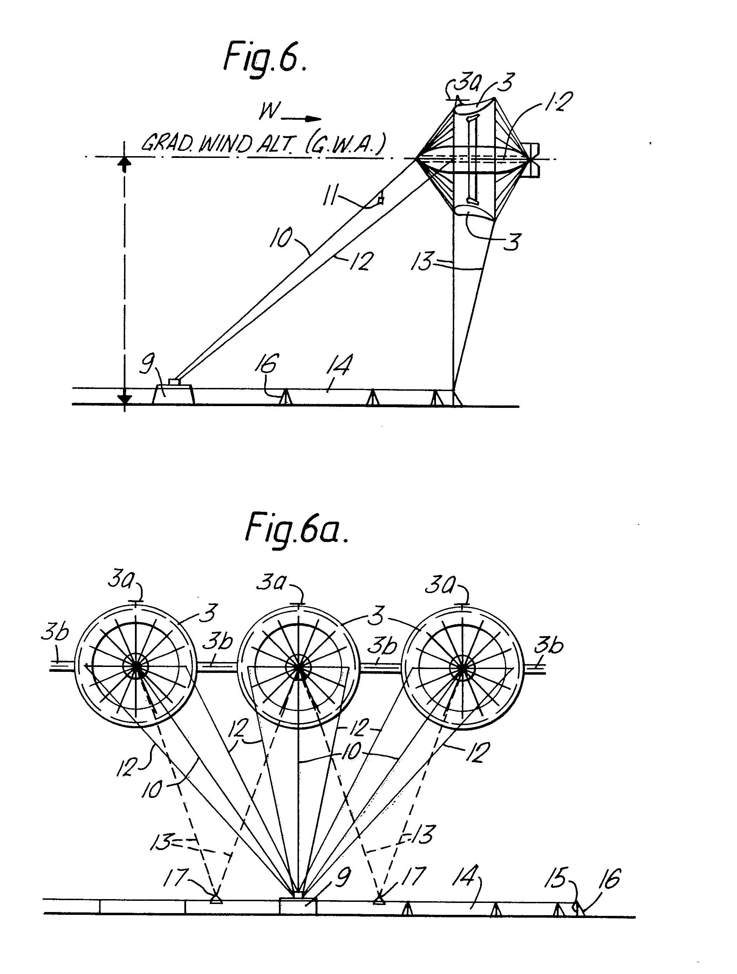

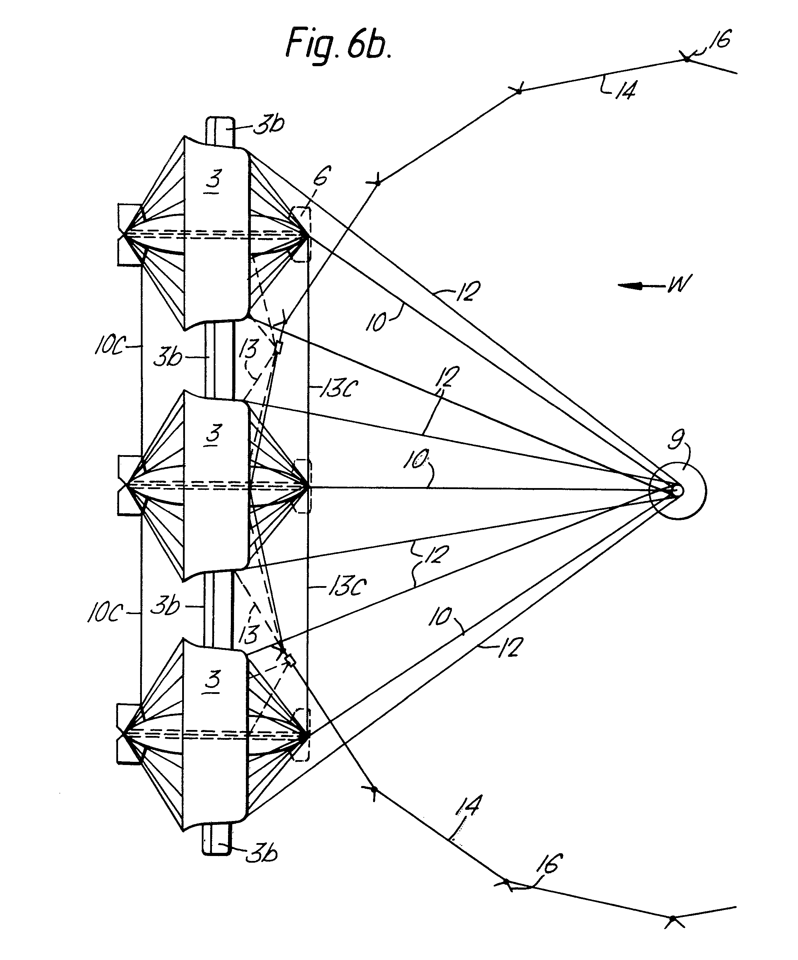

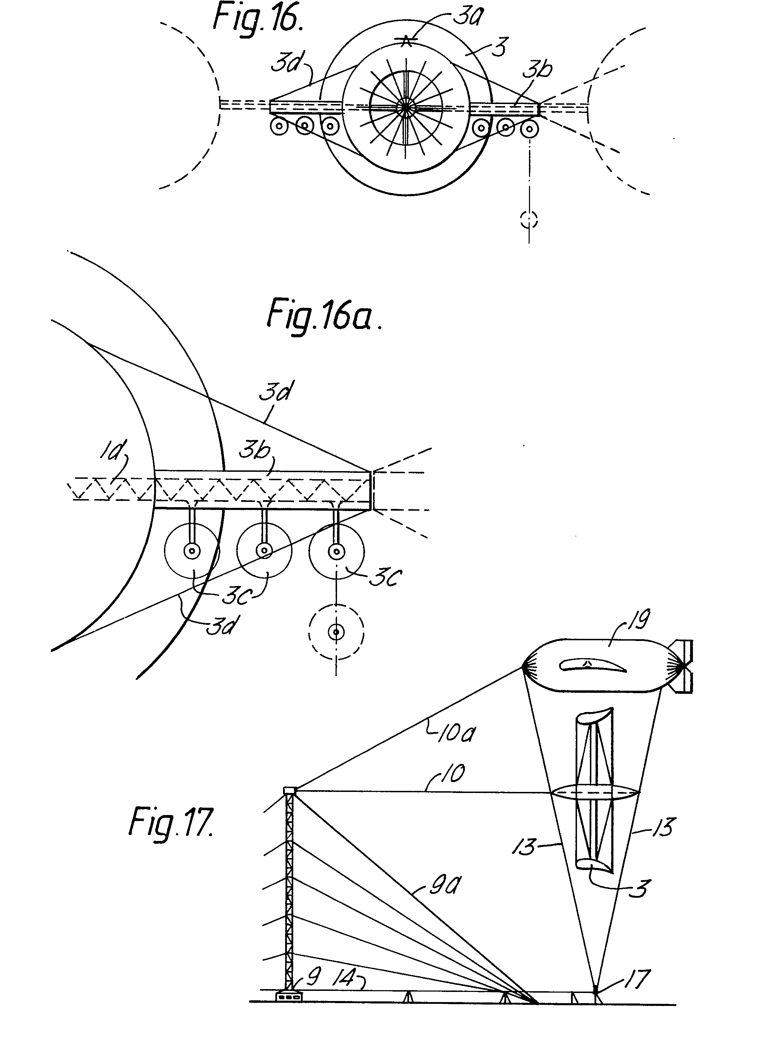

In order to obtain power output on a viable economic scale, it is desirable to use a plurality of wind turbine units in the form of a multimodule array. Such an arrangement is illustrated in Figs. 6, 6a and 6b. In this arrangement three units of the type described for example in Fig. 1, are disposed side-by-side by means of a laterally extending rigid lattice beam (see Fig. 16a) which forms the main structural element to interconnect wing units 3b. The lattice beam 1d is connected at right angles to the beam 1 of each unit and gives rigid lateral stabilisation to the array.

A suitable anchorage system is also illustrated in Figs. 6, 6a and 6b. In this arrangement an inclined main stay 10 is attached at one end to the front of beam 1 and at its other end to anchor means 9 located at ground level. The anchor means 9 is firmly fixed to the ground, for example by deep foundation piles, and it may comprise a building. A secondary front anchorage cable 12 connecting the wind turbine to anchor 9 may be used in areas of extremely high wind exposure. The anchor cables 10, 12 are rotatably connected to the anchor 9 such that the wind turbine or array of wind turbine units may move in a circular path of which the anchor 9 is the centre. This ensures that the rotors may face into the wind irrespective of the direction of the wind.

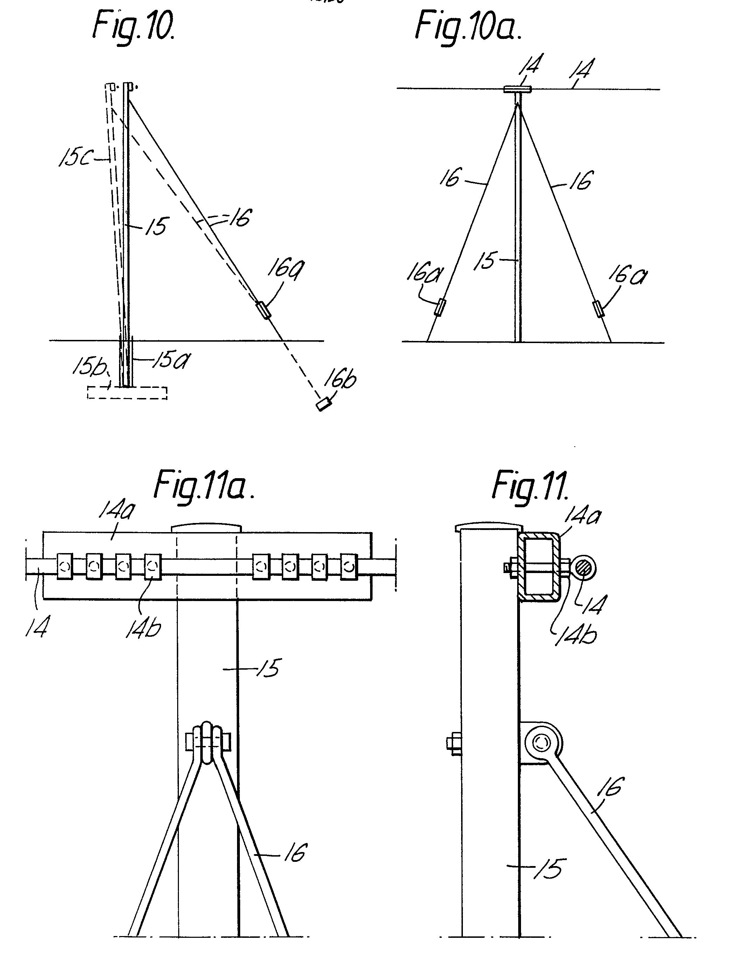

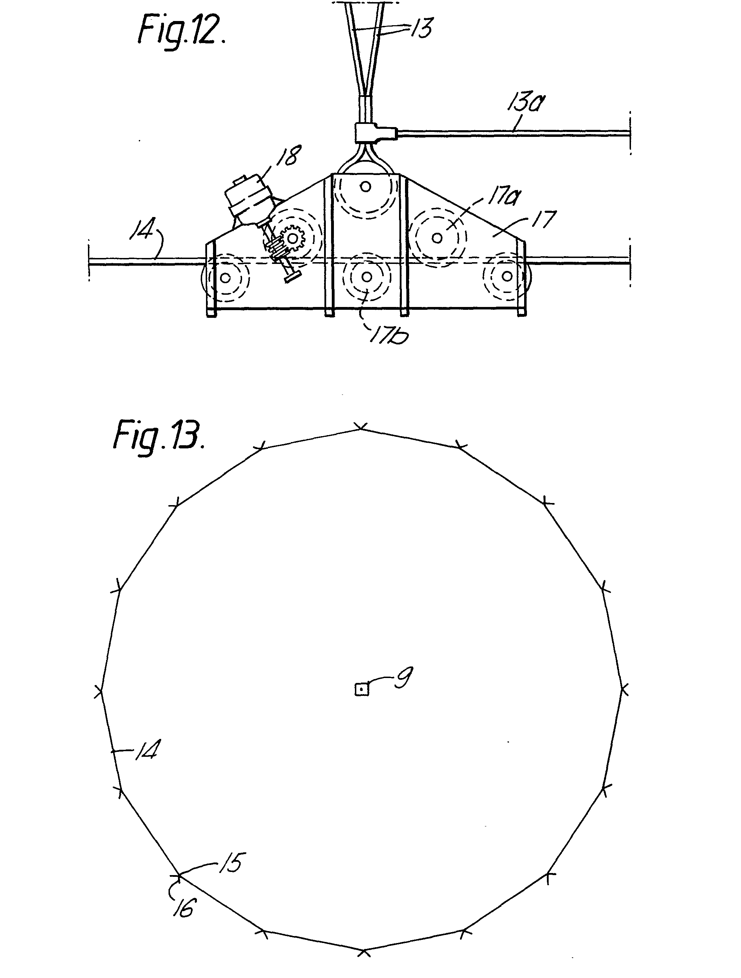

The wind turbine units are also anchored to the ground by means of vertical or substantially vertical anchor stays 13. In order to permit circular travel of the units around anchor 9, the anchor stays are connected to a circular tensioned anchorage cable system 14 by means of mobile connector units 17. The anchorage cable system 14 is shown in more detail in Figs. 10 to 14. The cable system 14 comprises one or more high tensile strength cables, which may be rust-proof steel cables or synthetic plastics cables supported on top of a plurality of steel pylons 15 disposed in a circle around anchor 9 (see Fig. 13). Details of the pylon 15 are shown in Figs. 10 and 10a. The pylons 15 are constructed of solid steel or of steel lattice and are supported on heavy tensile foundations. The circular cable 14 is attached to the top of the pylons by a horizontal connector unit 14a (see Figs. 11 and 11a) using clamps 14b in such a manner as to allow the mobile connector unit 17 (see Fig. 12) to travel along the entire length of the cable 14 without obstruction by the pylons 15. The foundations 15b for the pylons 15 are so constructed as to allow small lateral movement of the pylons (e.g. to the extent shown by broken lines 15c in Fig. 10). The reason for this is that when the anchor cable system is being erected the cable is initially held somewhat loosely on top of pylons 15 which are in the inclined position 15c. The pylons are stayed by stays 16 which are fixed to tensile foundations 16b. The stays 16 are provided with turnbuckles 16a which are tensioned to bring the pylons 15 into the vertical position thereby creating working tension in the cable 14. The foundations 15b and 16b are designed to resist the total residual uplift force of the system.

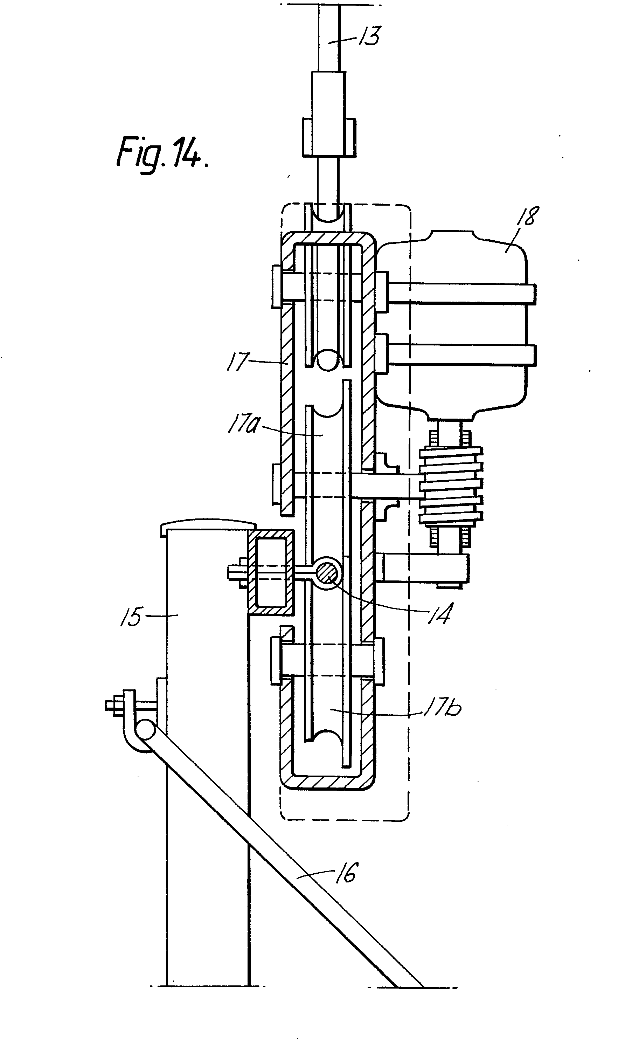

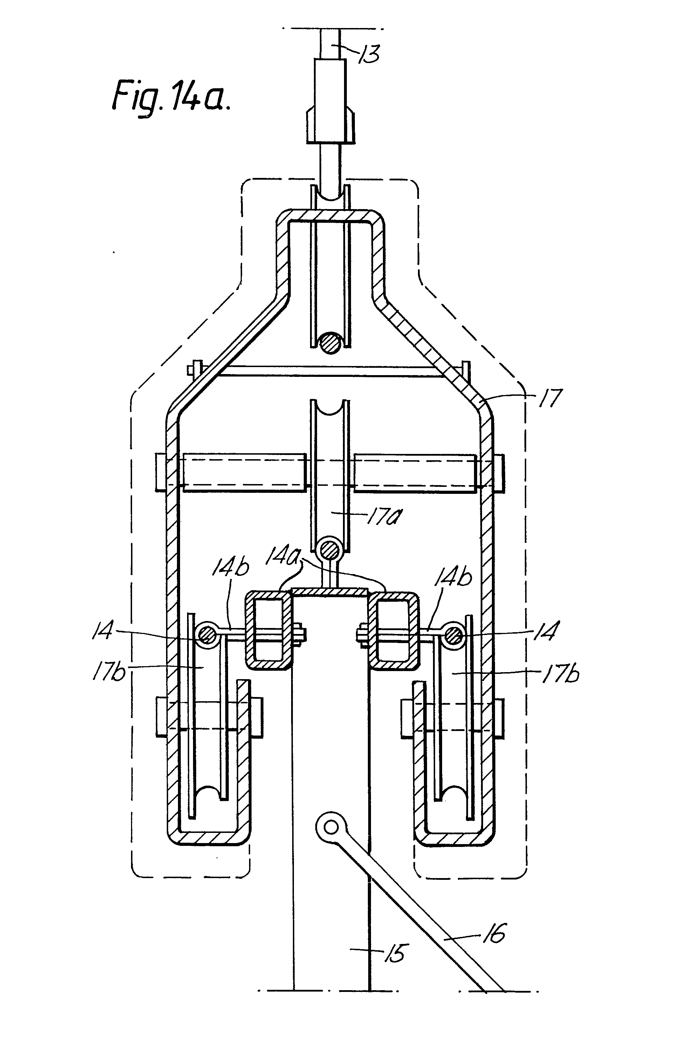

The mobile connector unit for connecting the anchor cables 13 to the circular cable 14 is shown in more detail in Figs. 12, 13 and 14a, and comprise a heavy steel plate unit in which a plurality of upper pulleys 17a and lower pulleys 17b are journalled. The cable 14 is gripped between these pulleys which are adapted to travel along the cable.  The connector unit 17 is driven along the circular cable 14 by means of an
electric motor 18 through a sprocket and pinion drive.  In this way
the entire array of wind turbine units may be moved in a circular
path around anchor 9 to face the rotors into the wind.  As shown in
Fig. 14a a system utilising twin circular cables 14 may be used.
The circular anchor cable system 14 allows the wind turbine units to
be located at any suitable site irrespective of ground factors thus
greatly increasing the choice of site.  The pylons 15 may vary in
height to suit ground contours and maintain cable 14 substantially
horizontal.

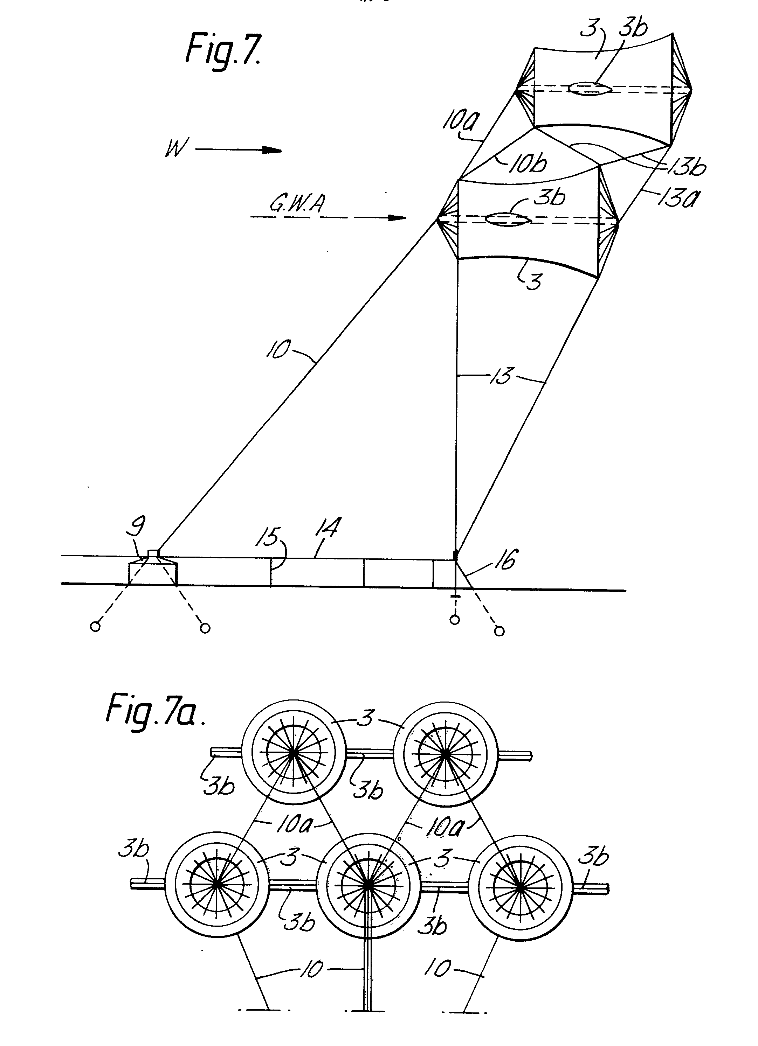

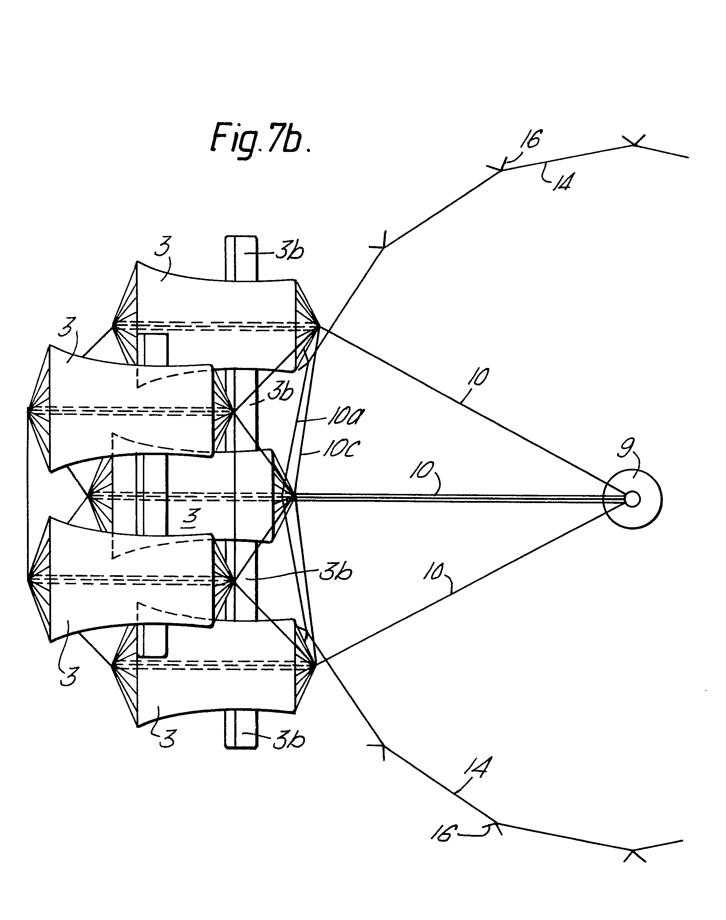

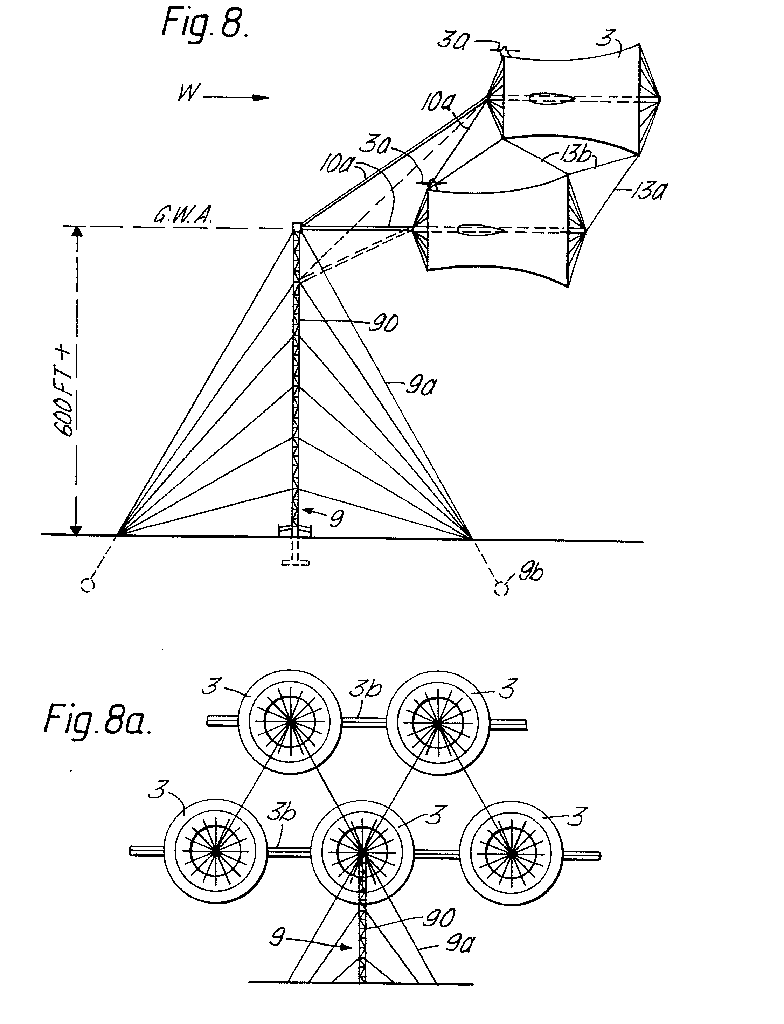

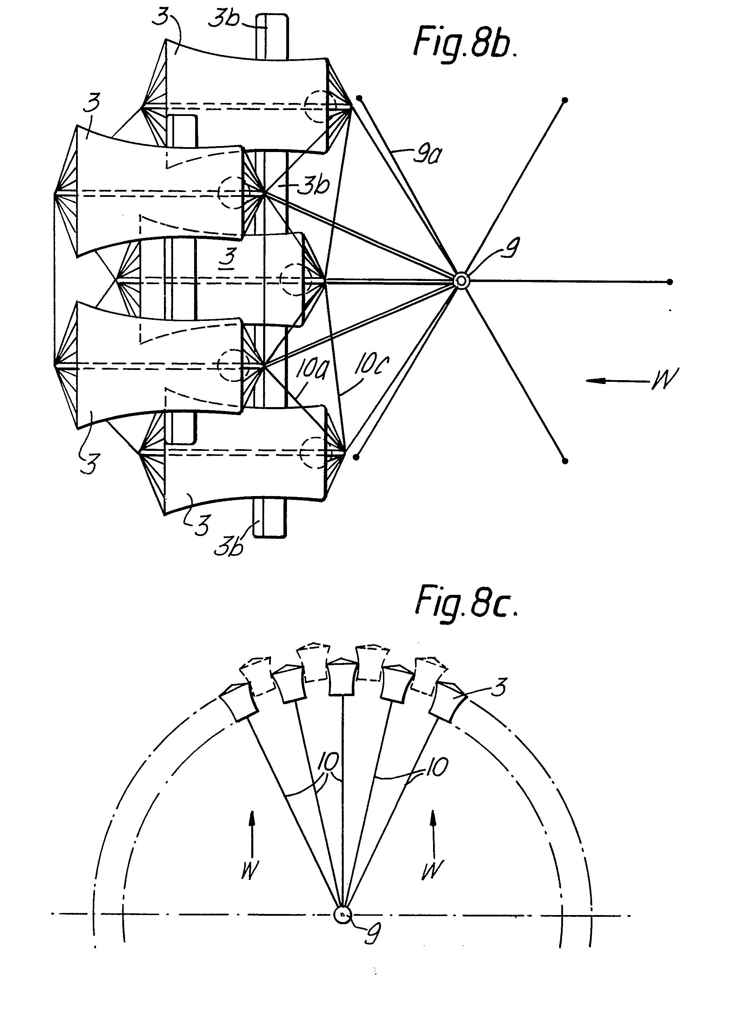

Referring now to Figs. 7 and 7a these show a multi-module array in
which the wind turbine units are arranged in a double tier.  Second-
ary anchorage cables 10a, 10b, 13a and 13b connect the lower tier with
the upper tier and maintain the upper tier in stable location relative
to the lower tier.  The gross uplift factor of the helium-filled bags
in the upper tier is higher than in the lower tier to maintain a rigid
wind-resisting tension in the secondary anchorage cables.  As shown in
Fig. 7a the lower tier may comprise three units, for example, while
the upper tier may have two units.  Figs. 8, 8a, 8b and 8c also illustrate a multi-tier system.  In this arrangement the anchor 9 is comprised of a lattice tower 90 which is supported by stays 9a which in
turn are anchored to tensile foundations 9b.  The multi-module array
is connected to the top of the tower by means of horizontal rigid
light-weight lattice beams 12a which are connected at one end to the
beam 1 of each unit of the lower tier, and at their other ends are
pivotally connected to the top of the tower 90.  The top tier of units
is pivotally connected to the tower by a plurality of inclined light-
weight lattice beams 10a in similar manner.  Thus, the array can pivot
as a whole around the tower  90 to face the wind W as illustrated in
Fig. 8c.

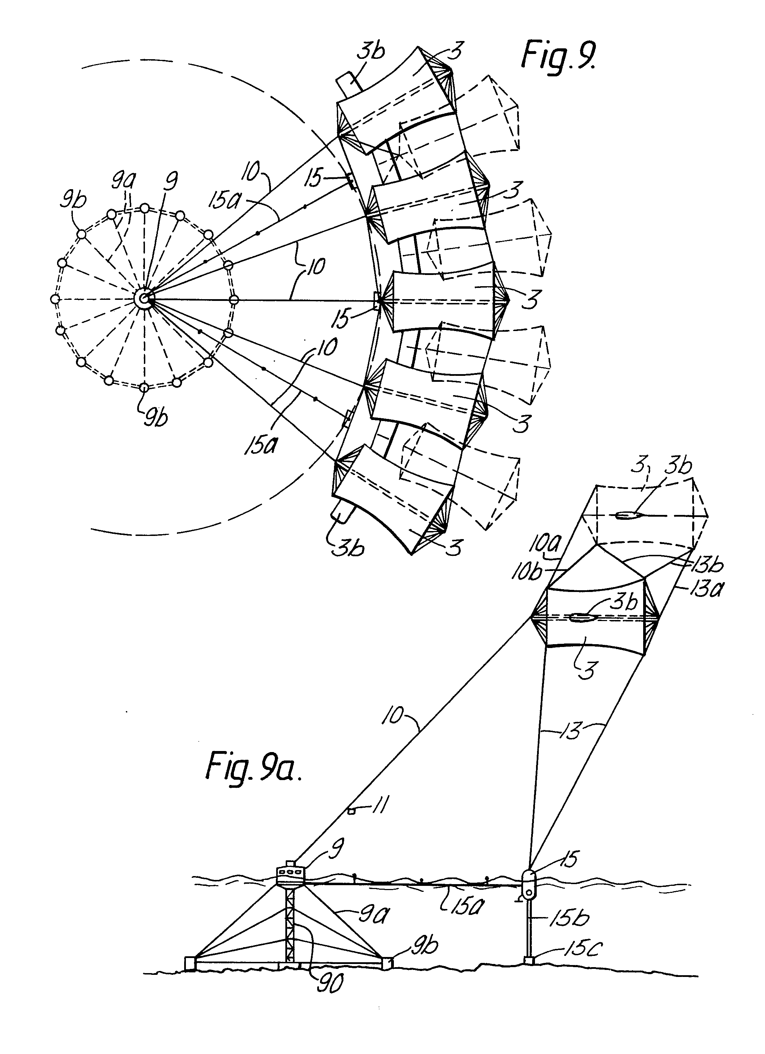

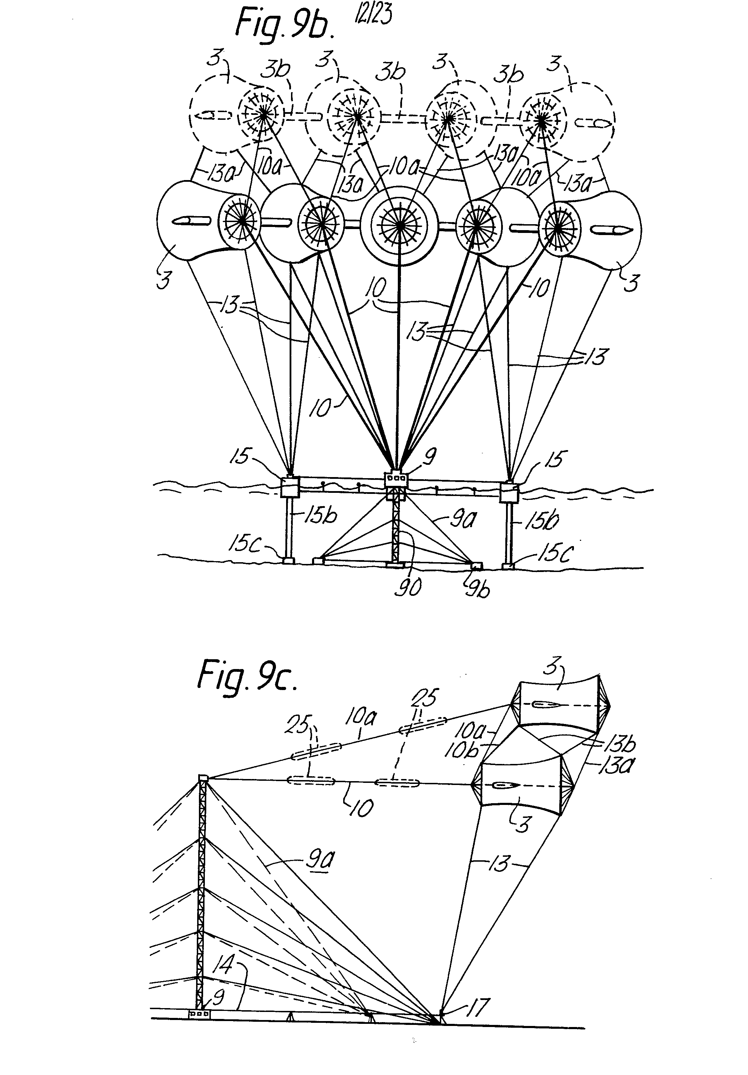

The embodiment shown in Figs. 9, 9a and 9b is a sea-based version of
the land-based version described previously.  In this arrangement the
anchor cables 13 are connected to a heavy floating power-driven unit 15, while the anchor cables 10 are rotatably connected to a central anchor 9. The anchor 9 is firmly fixed to the seabed by means of stays 9a which are attached to massive loads 9b on the seabed. The floating anchor 15 is connected to-the fixed anchor 9 by means of a floating cable 15a. Floating anchor 15 can be temporarily fixed to the seabed by means of anchor weights 15c which are suspended below the floating anchor 15 by a cable 15b. When it is desired to rotate the multi-module array of turbine units about the fixed anchor 9 so as to face the rotors into the wind, the anchor weights 15c are lifted aboard floating anchor 15 by means of powerful electric winches. The floating anchor itself is then moved through the water by means of electrically-driven propellers or thrusters to face the system into the wind.

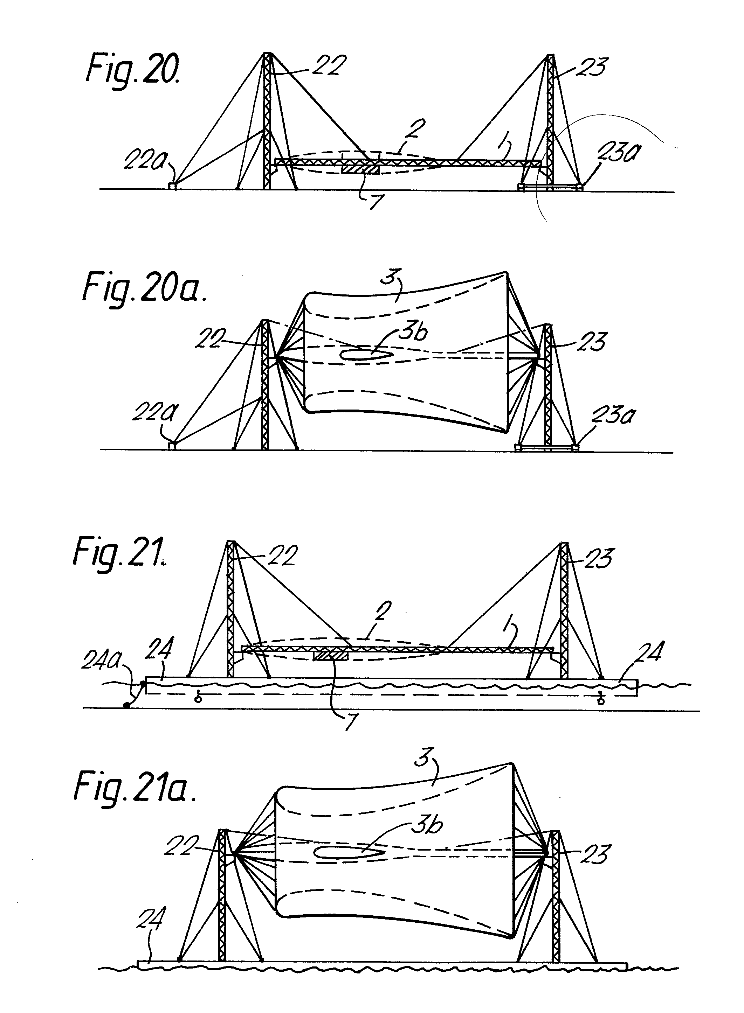

A method for the assembly and erection of the wind turbine units of the invention is illustrated in Figs. 20 to 21b inclusive. The apparatus for erecting the units comprises a fixed tower 22 supported by stays 22a, and the platform is movable on rails or the like around fixed tower 22. Each of the towers 22, 23 is provided with lifting gear. The first stage of assembly is shown in Fig. 20 in which the beam 2 with generator room is assembled at ground level and lifted between the towers. As shown in Fig. 20a the completed beam 1 is raised between the towers to a height which will facilitate the assembly and inflation of the gas-filled shroud 3. It will be appreciated that because of the large surface area presented by the inflated shroud 3 the structure is susceptible to stress and movement in high surface winds, and so it is desirable to be able to rotate the tower 23 relative to tower 22 to face the unit into the wind $W_1$ as illustrated in Fig. 20b.

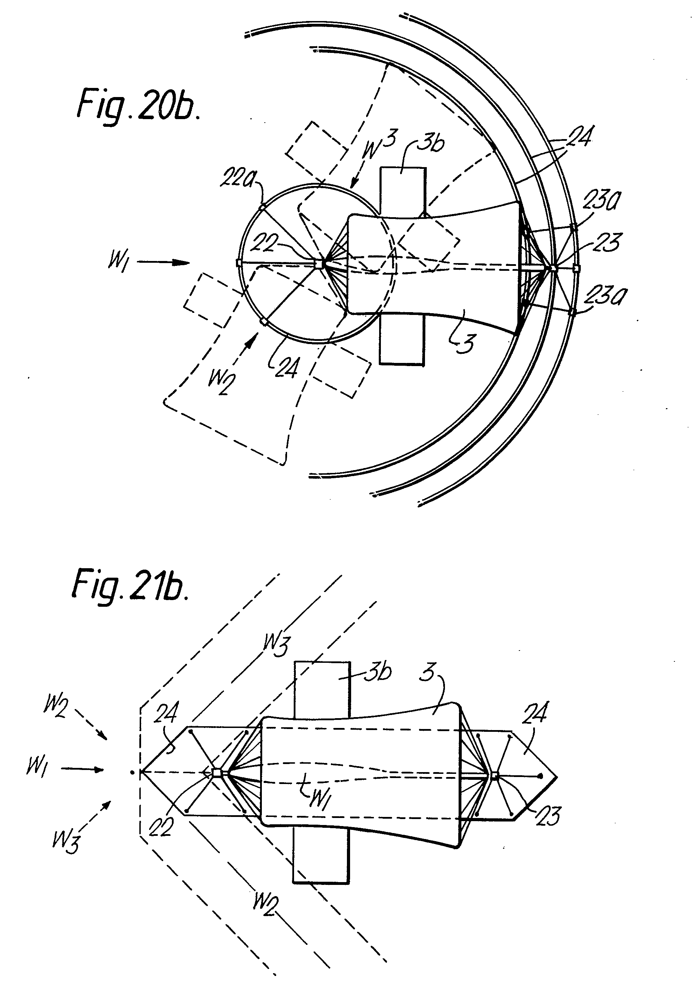

Figs. 21, 21a and 21b show a similar arrangement for assembling the structures at sea, or on a river or lake. In this embodiment two fixed towers 22 are used and these are supported on a floating raft or barge 24 which is anchored by one end to an anchor 24a. The construction and assembly of the units is as described above. The floating raft 24 assumes a natural downwind position from the anchor 24a so as to face the structure into the wind to reduce wind stresses during assembly.

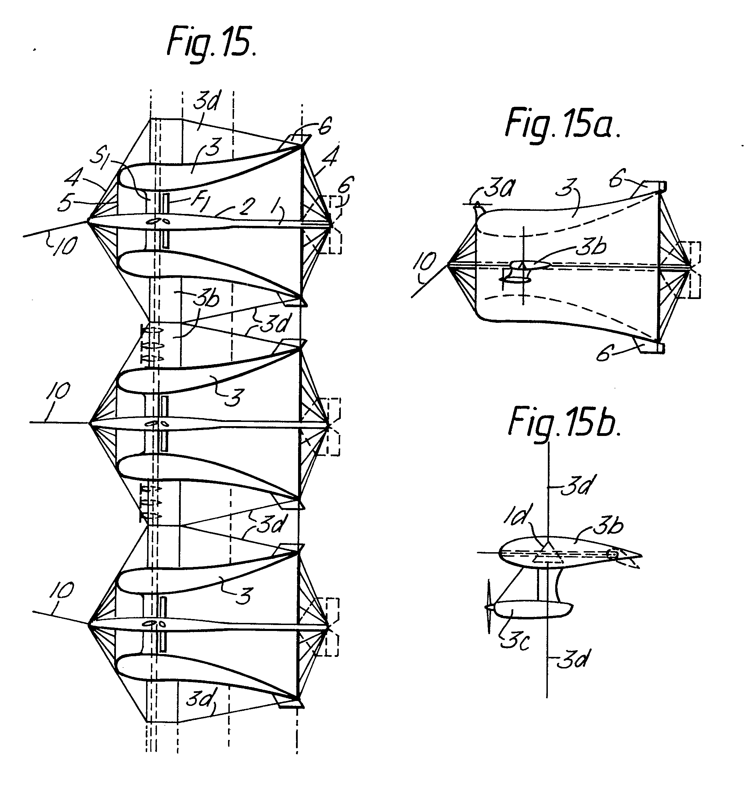

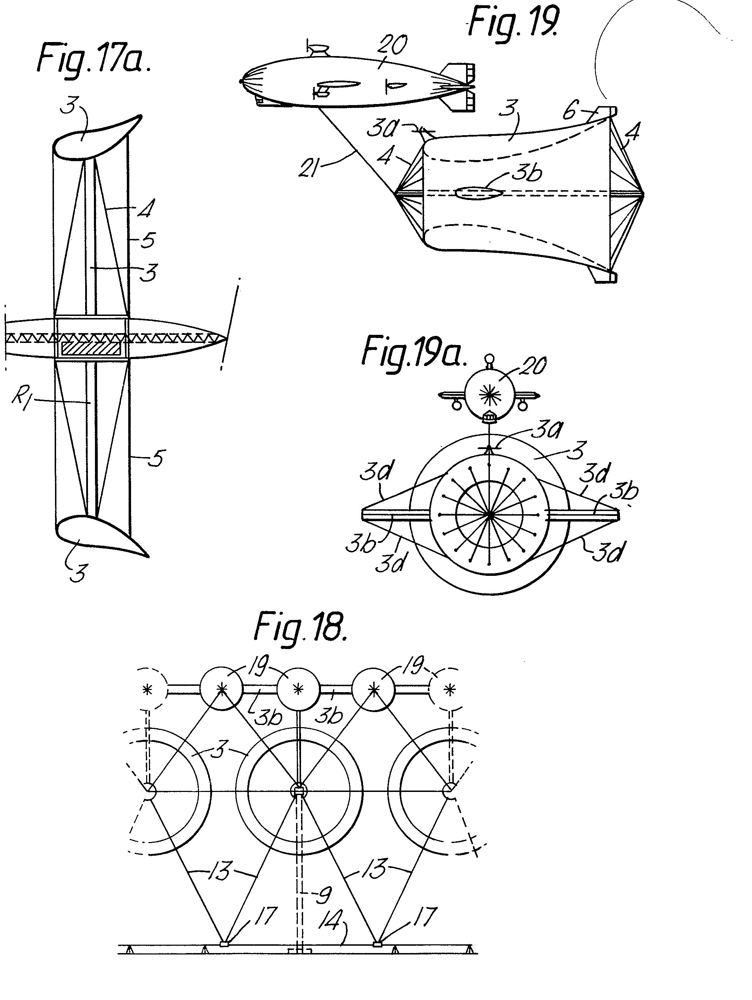

One method of transporting an array of assembled wind turbine units from the assembly site to an operating site is illustrated in Fig. 15. In this arrangement motor driven propellers 3c are suspended from side wing elements 3b. The propellers may be used to fly the airborne structure to the operating site and once the array is anchored by means of cables 10, 13, the propellers and their motors may be removed for re-use. Details of the method of attaching the propellers 3c and their motors to the wing assembly 3b is illustrated in Figs. 15a to 18a inclusive. It will be again noted that the lateral wings 3b are supported by the transverse lattice beam 3b which also serves to hold adjoining units in fixed relation. As more clearly seen in Fig. 15b each wing unit 3b is preferably in the form of a helium-filled bag of aerofoil shape, and is further supported by stays 3d. An alternative transport system for the completed wind turbine units is illustrated in Figs. 19 and 19a. In this arrangement the assembled unit is towed from the construction site to the operating site by means of a power-driven airship 20 to which it is connected by means of a towing cable 21 connected to the beam 1.

A further embodiment is shown in Fig. 9c in which the airborne structure is connected to an anchor tower 90 by means of cables 10, 10a. In this embodiment excessive catenary sag in the cables is prevented by means of auxiliary helium-filled bags attached to the cables along their length. Furthermore in this embodiment the structure is additionally anchored by a horizontal ground anchor cable 14 as previously described to which it is attached by cables 13. A somewhat similar arrangement is illustrated in Figs. 17 and 18, except that in this embodiment additional air lift is given by an auxiliary airship 19 disposed above the shroud 3 and anchored by cables 10a and 13.

A central main control unit for the system described above may be housed in a building comprising the anchor means 9. Helium- and air-delivery pipes, electric power cables, control cables and the like may be affixed to cable 10. If desired, cable 10 may also support a cable car for servicing the units (see Figs. 9a and 11). Alternatively, electric power from airborne wind generator may be delivered via cables attached to vertical cables 13.

The construction of large diameter (100 - 200 ft. plus) single or multiple diffuser augmented wind turbines according to the invention is technically and economically possible.  Research into early airship (1900 -
1937) construction and operation-technology shows that useful nett lift
values of up to 100 tons were indicated as quite normal; while modern
airship design and technology indicate the possibility of useful nett
lift values of up to 500 tons.  Within the framework of such huge load
carrying capability the design and construction of lighter than air
support vehicles of the invention requiring lift capabilities of 20 -
40 tons is possible.  (For design calculation 1,000,000 cu. ft. helium
is taken as 27 tons gross lift value).

To date, the largest wind turbines in course of design and construction
are a 300 ft. diameter 2 blade 2.5 MW unit on a 200 ft. tower in the
U.S.A.;  a 329 ft. diameter 2 blade 3 MW unit on a 300 ft. tower in Northern Germany;  and a projected 476 ft. diameter single blade 5 MW unit
on a 360 ft. tower also in Northern Germany.  However, a study of the
mean wind velocity profiles for winds at 300 - 400 ft. altitude over
inland sites, indicate that only 50/60% of gradient wind speed (GWS) is
available for power generation, while sea and coastal sites provide
80/85% GWS at similar altitudes.  On inland sites GWS is attainable only
at altitudes from 1300 - 2000 ft.  As GWS at these altitudes is double
surface wind speed, the power output from such wind is increased by a
factor of eight, i.e. cube of wind speed power differential.  Maximum
wind power output, therefore, can only be achieved by maximum augmentation of wind power output at altitudes of 1300 - 2000 ft. to a total
power increase factor of 24 - 32 times surface wind speed power.  Full
development of this maximum wind power potential is achieved by airborne
augmented wind turbines operating at heights of up to 1000 ft. above
ground or sea level, as described above.

The subject matter of Irish Patent Application Nos. 315/79 and 335/79
referred to herein is contained also in European Application Nos
80300461.3 and 80300749.1

CLAIMS:

1. A diffuser augmented wind turbine structure comprising a rotor assembly and an electric generator characterised in that the structure includes an axially disposed longitudinal load-carrying beam (1) which supports the rotor assembly and electric generator and defines a longitudinal axis about which the rotor ($R_1$) rotates, means for rendering the structure buoyant in air whereby the structure may be maintained airborne above the surface of the earth, said means including an annular lighter than air gas-filled shroud (3) surrounding the beam (1) to define a diffuser duct in which the rotor ($R_1$) rotates, means (1a) for maintaining the shroud (3) in aerodynamically fixed relation to the beam (1), and a stabilising stay system (10, 12, 13) connecting the beam (1) to anchor means (9) located at the surface of the earth such that the air-borne structure may travel in a circular path around the anchor means whereby the structure may be maintained substantially downwind of the anchor means with the diffuser inlet facing substantially into the wind irrespective of the direction of the wind.

2. A wind turbine structure as claimed in claim 1, characterised in that the diffuser duct has an air-intake portion upstream of the rotor ($R_1$), and a diffuser section downstream of the rotor ($R_2$) which is of conical shape and diverges away from the rotor $R_1$ towards a duct exit.

3. A wind turbine structure as claimed in claim 2, characterised in that the duct is of smaller diameter at the air-intake portion than at the exit.

4. A wind turbine structure as claimed in claim 3, characterised in that the air-intake portion of the duct converges towards the rotor ($R_1$).

5. A wind turbine structure as claimed in any of claims 1 to 4, characterised in that the shroud (3) is supported and maintained in aerodynamically fixed relation to the beam (1) by means of a radially-tensioned net or membrane (1a) held between support rings (1b, 1c) which are located at opposite ends respectively of the beam (1).

6.   A wind turbine structure as claimed in any of the preceding claims, characterised in that the stabilising stay system comprises a main stay (10) which is attached at one end to the front of the beam (1) and is pivotally attached at its other end to anchor means (9), and a secondary substantially vertical stay (13) connecting the beam to secondary anchor means (14).

7.   A wind turbine structure as claimed in claim 6 characterised in that the secondary anchor means comprises a circular anchorage cable system (15) disposed in a circle of which the main anchor means (9) is the centre, and the vertical stay (13) is connected to said circular anchorage system (15) by mobile connectors (27) such that the end of the vertical stay (13) can travel in a circular path around the main anchor (9).

8.   A plurality of diffuser augmented wind turbines as claimed in any of claims 1 to 7, and interconnected together to form a multi-module array, said array being anchored by means of a stabilising stay system.

9.   A plurality of diffuser augmented wind turbines as claimed in claim 7, characterised in that they are interconnected together by means of a laterally extending rigid beam (1d).

Fig.1.

0045202

Fig. 1a.

Fig. 2.

Fig. 3.

0045202

**Fig. 4.**

**Fig. 4a.**

4123

Fig.5.

Fig.5a.

Fig.6.

Fig.6a.

Fig. 6b.

6/23

0045202

Fig.7.

Fig.7a.

0045202

Fig.7b.

**Fig.8.**

W →

G.W.A.

600FT +

**Fig.8a.**

0045202

10/23

Fig.8b.

Fig.8c.

0045202

11/23

Fig.9.

Fig.9a.

0045202

Fig. 9b. 12/23

Fig. 9c.

0045202

Fig.10.

Fig.10a.

Fig.11a.

Fig.11.

14/23

Fig.12.

13

13a

18

14

17a

17

17b

Fig.13.

9

14

15

16

0045202

15/23

13

Fig.14.

18

17

17a

15

14

17b

16

0045202

Fig. 14a.

Fig.15.

Fig.15a.

Fig.15b.

17/23

0045202

18/23

0045202

Fig. 16.

Fig. 16a.

Fig. 17.

Fig.17a.

Fig.19

Fig.19a.

Fig.18.

Fig.20.

Fig.20a.

Fig.21.

Fig.21a.

0045202

Fig. 20b.

Fig. 21b.

Fig. 22.

Fig. 23.

## Fig. 24.

G.W →

·2165 SQ. M.
(560 SQ. KM)

(2·242)
SQ. KM

·866
SQ. MILE

## Fig. 25.

| M | FT | | | | |

G.W. (800M) ½ MILE  I MILE (1·6KM)  ½ MILE (800M)

640 2100'
548 1800'
457 1500'
365 1200'
274 900'
182 600'
91 300'

% 0 50 100

½ MILE  I MILE  ½MILE

2100'
1800'
1500'
1200'
900'
600'
0' 300'

0045202

European Patent
Office

**EUROPEAN SEARCH REPORT**

0045202
Application number

EP 81 30 3419

## DOCUMENTS CONSIDERED TO BE RELEVANT

| Category | Citation of document with indication, where appropriate, of relevant passages | Relevant to claim |
|---|---|---|
| | US - A - 4 166 596 (MOUTON)<br>* Column 4, line 11 - column 6, line 28; column 7, line 46 - column 8, line 51 * | 1-4 |
| | -- | |
| | US - A - 4 073 516 (KLING)<br>* Column 5, line 41 - column 7, line 38; column 8, line 37 - column 9, line 8; column 7, lines 39-66 * | 1-4,6, 8,9 |
| | -- | |
| | FR - A - 1 354 799 (CHAMBOISSIER)<br>* Page 1, right-hand column, line 29 - page 2, right-hand column, line 6 * | 7 |
| | -- | |
| | DE - C - 830 628 (HEUBECK)<br>* Page 1, lines 17-28 * | 1 |
| | ---- | |

**CLASSIFICATION OF THE APPLICATION (Int. Cl.³)**

F 03 D 1/04
11/04

**TECHNICAL FIELDS SEARCHED (Int. Cl.³)**

F 03 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search<br>The Hague | Date of completion of the search<br>27-10-1981 | Examiner<br>DE WINTER | |

EPO Form 1503.1 06.78